Europäisches Patentamt

European Patent Office

Office européen des brevets

(19)

(11)  **EP 0 974 226 B1**

(12)  **EUROPÄISCHE PATENTSCHRIFT**

(45) Veröffentlichungstag und Bekanntmachung des
Hinweises auf die Patenterteilung:
**21.11.2001  Patentblatt 2001/47**

(21) Anmeldenummer: **98928098.7**

(22) Anmeldetag: **31.03.1998**

(51) Int Cl.$^7$: **H04N 3/15**, H04N 5/217

(86) Internationale Anmeldenummer:
**PCT/DE98/00916**

(87) Internationale Veröffentlichungsnummer:
**WO 98/47280 (22.10.1998 Gazette 1998/42)**

(54)  **BILDSENSOR MIT EINER VIELZAHL VON BILDPUNKT-SENSORBEREICHEN**

IMAGER WITH A PLURALITY OF IMAGE POINT DETECTOR AREAS

DETECTEUR D'IMAGES A PLURALITE DE ZONES DETECTRICES DE PIXELS

(84) Benannte Vertragsstaaten:
**DE FR GB IT**

(30) Priorität: **11.04.1997  DE 19715214**

(43) Veröffentlichungstag der Anmeldung:
**26.01.2000  Patentblatt 2000/04**

(73) Patentinhaber: **Infineon Technologies AG**
**81669 München (DE)**

(72) Erfinder: **ALGER-MEUNIER, Michael**
**D-85540 Haar (DE)**

(74) Vertreter: **Zedlitz, Peter, Dipl.-Inf.**
**Patentanwalt,**
**Postfach 22 13 17**
**80503 München (DE)**

(56) Entgegenhaltungen:
**EP-A- 0 647 064        US-A- 5 302 824**

EP 0 974 226 B1

**Beschreibung**

Die Erfindung betrifft einen Bildsensor mit einer Vielzahl von Bildpunkt-Sensorbereichen und mit einer Optik, die ein durch den Bildsensor aufzunehmendes Bild auf die Sensorbereiche abbildet.

Es sind Bildsensoren bekannt, bei denen als Bildpunkt-Sensorbereiche Bildpunkt-Sensorelemente in Form von sogenannten Charge Coupled Devices (CCDs) oder von in CMOS-Technologie ausgeführten CMOS-Sensorelementen zum Einsatz kommen. Die Sensorelemente sind üblicherweise in der Weise aneinandergefügt, daß insgesamt eine zusammenhängende Sensorfläche des Bildsensors gebildet wird. Ein durch die Optik auf diese Sensorfläche abgebildetes Bild wird durch die Sensorelemente in elektrische Signale umgewandelt, wobei jedes Sensorelement einem Bildpunkt des aufgenommenen Bildes entspricht. Die Auflösung der Bildsensoren ist dabei abhängig von der Auflösung der eingesetzten Optik und den Abmessungen der Sensorelemente.

Bei Bildsensoren kann es zu fertigungsbedingten Toleranzen der optischen und elektrischen Eigenschaften der einzelnen Sensorelemente kommen. Dies ist beispielsweise in großem Maße bei CMOS-Sensorelementen (CMOS-Pixel- bzw. -Bildpunkt-Sensor) der Fall. Durch die herstellungsbedingten Toleranzen ergeben sich für verschiedene Sensorelemente selbst bei Bestrahlung mit derselben Lichtmenge unterschiedliche elektrische Signale, die sich als sogenanntes Fixed-Pattern-Noise (FPN) und als Signalrauschen bemerkbar machen. Um diese ungewünschten Toleranzen zu kompensieren, sind spezielle Kompensationsschaltungen notwendig.

In der DE-A1 195 24 577 ist ein Bildsensor mit den Merkmalen des Oberbegriffs des Anspruchs 1 beschrieben. Die Mittelung der Meßwerte mehrerer Sensorelemente erfolgt durch eine Addition von bei der Messung durch die einzelnen Sensorelemente erzeugten Ladungen. Anschließend wird eine A/D-Wandlung der summierten Ladungen durchgeführt.

Der Erfindung liegt die Aufgabe zugrunde, einen Bildsensor anzugeben, bei dem die Mittelung der Meßwerte und ihre A/D-Wandlung auf einfache Weise erfolgt.

Diese Aufgabe wird durch einen Bildsensor gemäß Anspruch 1 gelöst. Weiterbildungen und Ausgestaltungen der Erfindung sind in den Unteransprüchen gekennzeichnet.

Erfindungsgemäß ist vorgesehen, jeweils mehrere Sensorelemente zu Bildpunkt-Sensorbereichen zusammenzufassen und bei der Aufnahme eines Bildes für jeden Sensorbereich eine Mittelung der elektrischen Meßwerte seiner Sensorelemente vorzunehmen, wobei jeder der auf diese Weise ermittelten Mittelwerte einem Bildpunkt des aufgenommenen Bildes entspricht. Somit ist jedem Bildpunkt des aufgenommenen Bildes jeweils einer der Sensorbereiche mit mehreren Sensorelementen zugeordnet. Hierdurch erfolgt sozusagen ein "räumliches Oversampling". Die Erfindung sieht weiterhin vor, daß die Mittelung der Meßwerte je Sensorbereich durch einen Sigma/Delta-Analog-Digital-Wandler durchgeführt wird. Sigma/Delta-A/D-Wandler enthalten einen ihrem Ausgang vorgeschalteten Tiefpaß, der die gewünschte Mittelung bewirkt, wenn der Sigma/Delta-A/D-Wandler so getaktet wird, daß die Meßwerte der Sensorelemente eines Sensorbereich sequentiell innerhalb einer Abtastperiode des aufzunehmenden Bildes von ihm verarbeitet werden. Vorteilhaft erfolgt dabei sowohl die A/D-Wandlung der Meßwerte als auch ihre anschließende Mittelung durch den Sigma/Delta-A/D-Wandler und somit durch einen einzigen Schaltungsbaustein.

Vorteilhaft ist, daß - anders als bei der Realisierung jedes Bildpunkt-Sensorbereichs durch nur ein Sensorelement - durch die erfindungsgemäße Mittelung der Meßwerte der Sensorelemente je Sensorbereich eine Kompensation der herstellungsbedingten Toleranzen der Sensorelemente erfolgt, ohne daß weitere Kompensationsschaltungen notwendig sind. Je kleiner die Abmessungen der Sensorelemente sind und, damit einhergehend, je mehr Sensorelemente für einen Sensorbereich mit vorgegebener Größe vorgesehen sind, desto besser wird die gewünschte Kompensation herstellungsbedingter Toleranzen der einzelnen Sensorelemente aufgrund der Mittelung erreicht.

Unabhängig von der erreichbaren Grenze der optischen Auflösung ist daher eine laufende Verbesserung der Genauigkeit des erfindungsgemäßen Bildsensors durch Verkleinerung der Abmessungen der Sensorelemente und gleichzeitige Erhöhung ihrer Anzahl je Sensorbereich möglich, sofern die Abmessungen der Sensorbereiche unverändert bleiben, da dann eine größere Anzahl von Meßwerten je Sensorbereich gemittelt werden.

Eine Weiterbildung der Erfindung sieht vor, daß die Abmessungen der Sensorbereiche möglichst genau mit der Auflösung der Optik übereinstimmen. Die Abmessungen der Sensorelemente sind dann zwangsläufig kleiner als die Auflösung der Optik. Vorteilhafterweise erhalten dann alle Sensorelemente jedes Sensorbereichs bei Aufnahme eines Bildes jeweils dieselbe optische Anregung in Form der einfallenden Lichtmenge, so daß eine optimale räumliche Auflösung erzielt wird.

Speziell bei CMOS-Sensoren wird es zukünftig möglich sein, die Abmessungen der Sensorelemente kleiner als die Auflösung der handelsüblichen Optiken mit einer Auflösung von etwa 5x5μm zu gestalten. Diese eignen sich daher besonders gut zum Einsatz im erfindungsgemäßen Bildsensor.

Bei einer Weiterbildung der Erfindung ist die Größe der Sensorbereiche und somit die Anzahl der Sensorelemente pro Sensorbereich veränderbar. Bei einem solchen Bildsensor mit vorgegebener Optik und vorgegebenen Abmessungen der Sensorelemente ist es möglich, durch Veränderung der Sensorbereichsgröße die räumliche Auflösung auf Kosten der Helligkeits-bzw. Farbauflösung (die aufgrund der erfindungsgemäßen Mittelung mit der Anzahl der Sensorelemente pro Sensorbereich konstanter Größe zunimmt) zu erhöhen beziehungsweise zugunsten dieser zu erniedrigen.

Eine Weiterbildung der Erfindung sieht vor, daß bei Veränderung der Sensorbereichsgröße eine entsprechende Anpassung der Auflösung der Optik erfolgt. Hiermit ist erreichbar, daß Optik und Sensorbereiche jeweils aufeinander abgestimmt sind, so daß in jedem Fall eine optimale Auflösung des Bildsensors erreicht wird. Die Anpassung der Auflösung der Optik kann beispielsweise durch Auswechseln von Linsen geschehen.

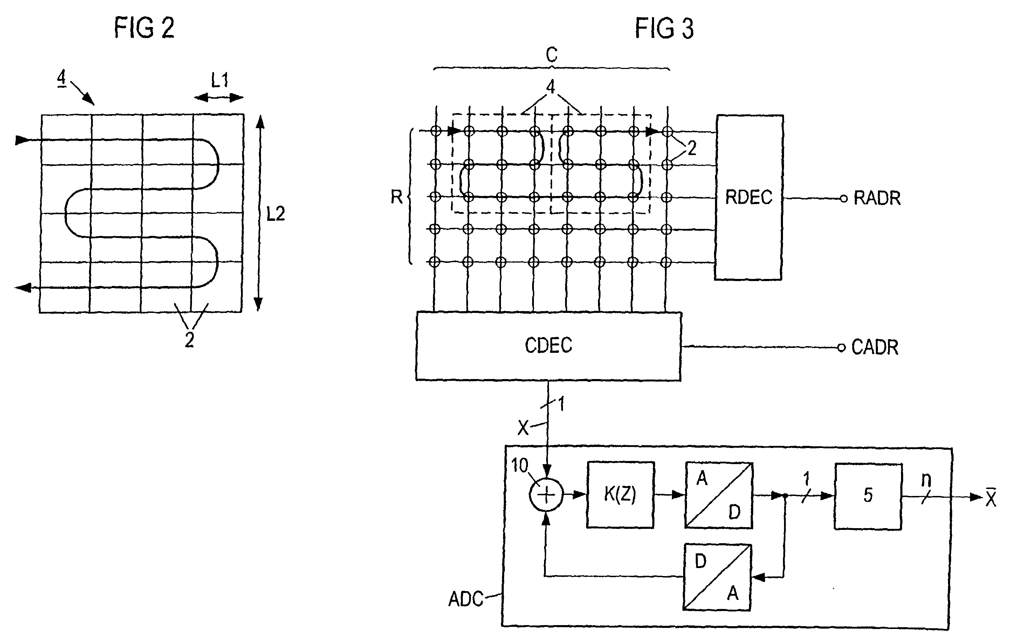

Sigma/Delta-A/D-Wandler sind beispielsweise aus R. van de Plassche: Integrated Analog-to-Digital and Digital-to-Analog-Converters, Kluwer-Verlag, 1994, bekannt. Ihr grundsätzlicher Aufbau wird bei der Erläuterung eines Ausführungsbeispiels der Erfindung anhand Figur 3 weiter unten beschrieben. Bei Einsatz eines mit der Auslesefrequenz der Sensorelement-Meßwerte getakteten Sigma/Delta-A/D-Wandlers, dem die Meßwerte sequentiell zugeführt werden, ergibt sich am Ende einer Abtastperiode an dessen Ausgang der erfindungsgemäß vorgesehene Mittelwert in Form eines digitalen Wortes.

Um den schaltungstechnischen Aufwand gering zu halten, ist es günstig, anstelle jeweils eines Sigma/Delta-A/D-Wandlers je Sensorbereich einen gemeinsamen Sigma/Delta-A/D-Wandler für mehrere der Sensorbereiche oder sogar für alle Sensorbereiche vorzusehen. Die Auslesefrequenz der Sensorelemente und die daran angepaßte Arbeitsfrequenz des Sigma/Delta-A/D-Wandlers muß dann entsprechend hoch gewählt werden, um innerhalb einer Abtastperiode des aufzunehmenden Bildes nacheinander jeweils die Mittelwerte für jeden Sensorbereich zu ermitteln.

Vorteilhaft ist es, wenn bei dem Bildsensor die Sensorelemente matrixförmig in Zeilen und Spalten angeordnet sind und zur Ermittlung der Mittelwerte ihre Meßwerte sequentiell für jeden Sensorbereich jeweils zeilenweise oder spaltenweise mit jeweiligen Richtungswechseln an den Rändern des jeweiligen Sensorbereichs ausgelesen und anschließend dem Sigma/Delta-A/D-Wandler zugeführt werden. Hierdurch ist gewährleistet, daß innerhalb der Sensorbereiche immer benachbarte Sensorelemente aufeinanderfolgend ausgelesen werden. Bei benachbarten Sensorelementen mit ausreichend kleinen Abmessungen unterscheidet sich die einfallende Lichtmenge kaum, so daß für die Mittelung durch den Sigma/Delta-A/D-Wandler günstige Bedingungen herrschen, da dann jeder der zu mittelnden Meßwerte auf annähernd derselben optischen Anregung beruht.

Eine Weiterbildung der Erfindung sieht vor, daß bei einem zeilenweisen bzw. spaltenweisen Auslesen der Sensorelemente jedes der Sensorbereiche die Anzahl der Sensorelementzeilen bzw. Sensorelementspalten je Sensorbereich ungerade ist. Dies hat den Vorteil, daß ein sequentielles Auslesen der Sensorelemente von wenigstens zwei benachbarten Sensorbereichen jeweils so erfolgen kann, daß nach dem Auslesen des letzten Sensorelements eines vorhergehenden Sensorbereichs jeweils ein diesem benachbartes Sensorelement des nachfolgenden Sensorbereiches ausgelesen wird. Dies ist günstig, weil auch bei benachbarten Sensorbereichen die einfallende Lichtmenge nur relativ geringe Unterschiede aufweist, so daß der Sigma/Delta-A/D-Wandler zu Beginn des jeweils nachfolgenden Sensorbereiches einen günstigen Anfangszustand aufweist, wie anhand des Ausführungsbeispiels bezüglich Figur 3 weiter unten noch erläutert wird.

Nach einer Weiterbildung der Erfindung ist es vorgesehen, daß der Bildsensor ein Farbbildsensor mit wenigstens zwei Arten von Sensorelementen zum Aufnehmen von jeweils verschiedenen Farben eines aufzunehmenden Bildes ist und daß zur Mittelung der Meßwerte der Sensorelemente jeweils benachbarte Sensorelemente derselben Art zu entsprechenden zwei Arten von Sensorbereichen zusammengefaßt sind und je aufzunehmender Farbe wenigstens einen Sigma/Delta-A/D-Wandler vorgesehen ist, dem die Meßwerte der entsprechenden Art von Sensorbereichen nacheinander zugeführt werden. Das Vorsehen von getrennten Sigma/Delta-A/D-Wandlern je Farbe ist notwendig, da die Lichtintensität je aufgenommener Farbe jeweils unterschiedlich ist und somit bei aufeinander folgender Mittelung der Meßwerte von Sensorelementen für unterschiedliche Farben trotz benachbarter Sensorelemente größere Sprünge zwischen den jeweiligen Meßwerten auftreten. Daher ist der Endzustand des Wandlers nach Mittelung der Meßwerte einer Farbe ungeeignet als Anfangszustand zur Mittelung der Meßwerte einer anderen Farbe.

Die Erfindung wird im folgenden anhand der Figuren bezüglich von Ausführungsbeispielen erläutert. Es zeigen:

Figur 1	ein Ausführungsbeispiel des erfindungsgemäßen Bildsensors in einer Prinzipskizze,

Figur 2	ein Ausführungsbeispiel für einen der Bildpunkt-Sensorbereiche,

Figur 3	ein vereinfachtes Blockschaltbild eines Bildsensors mit einem Sigma/Delta-A/D-Wandler zur Mittelung der Meßwerte der Sensorelemente,

Figur 4	ein Ausführungsbeispiel der Sensorelemente in Form eines CMOS-Sensorelements,

Figur 5	einen Ausschnitt einer Sensorfläche eines anderen Ausführungsbeispiels des Bildsensors mit Sensorbereichen einstellbarer Größe und

Figur 6        einen Ausschnitt der Sensorfläche eines weiteren Ausführungsbeispiels des Bildsensors mit Sensorbereichen für drei verschiedene Farben.

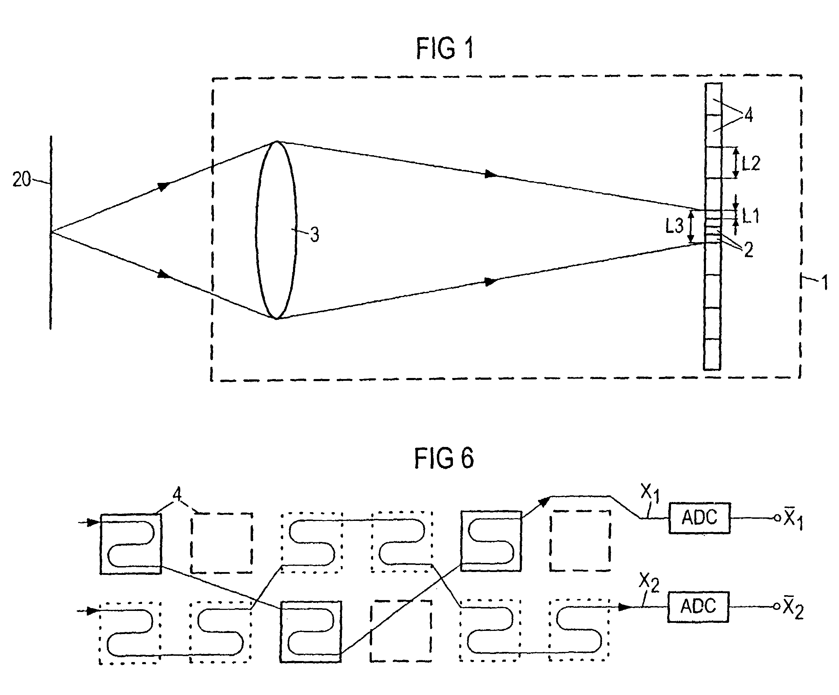

Figur 1 zeigt eine Prinzipskizze eines Ausführungsbeispiels des erfindungsgemäßen Bildsensors 1. Dieser weist eine Optik 3 mit einer Auflösung L3 zur Abbildung eines aufzunehmenden Bildes 20 auf eine Sensorfläche des Bildsensors 1 auf. Die Sensorfläche setzt sich aus Bildpunkt-Sensorbereichen 4 zusammen, von denen jeder mehrere benachbarte Sensorelemente 2 aufweist. In Figur 1 sind die Abmessungen L1 der Sensorelemente 2, die Abmessungen L2 der Sensorbereiche 4 und die optische Auflösung L3 der Optik 3 eingezeichnet. Die Sensorelemente 2 und Sensorbereiche 4 sind, ebenso wie das Bild 20 und die Optik 3, vereinfacht in einer zweidimensionalen Seitenansicht dargestellt. Die Sensorelemente 2 und/oder die Sensorbereiche 4 sind quadratisch. Bei anderen Ausführungsbeispielen der Erfindung können sie jedoch auch andere Form, z.B. Rechteckform, aufweisen.

In Figur 1 stimmt die Auflösung L3 der Optik 3 mit den Abmessungen L2 der Sensorbereiche 4 überein. Somit erhalten die Sensorelemente 2 jedes Bildpunkt-Sensorbereichs 4 während der Aufnahme eines Bildes jeweils annähernd dieselbe Lichtinformation, so daß eine optimale Auflösung des Bildsensors erreicht wird, wie im folgenden anhand von Figur 2 erläutert wird.

Figur 2 zeigt ein Ausführungsbeispiel für einen der Bildpunkt-Sensorbereiche 4 in einer Draufsicht. Der Sensorbereich 4 ist aus vier mal vier, also sechzehn, der Sensorelemente 2 zusammengesetzt. Erfindungsgemäß ist es vorgesehen, die Meßwerte aller Sensorelemente 2 jedes der Sensorbereiche 4 jeweils sequentiell auszulesen und für jeden Sensorbereich 4 zu mitteln, wobei jeder Mittelwert einem Bildpunkt des aufgenommenen Bildes entspricht. Durch die Mittelung der Meßwerte je Sensorbereich 4 erfolgt eine Kompensation von herstellungsbedingten Toleranzen der Sensorelemente 2.

Während üblicherweise jedes Sensorelement eines Bildsensors einem Bildpunkt des aufgenommenen Bildes entspricht, entspricht bei der Erfindung der gebildete Mittelwert jedes Sensorbereiches 4 einem solchen Bildpunkt. Weil beim gezeigten Ausführungsbeispiel die Abmessungen L2 der Sensorbereiche 4 in etwa der Auflösung L3 der Optik 3 entsprechen, sind die Abmessungen L1 der Sensorelemente 2 deutlich kleiner als die Auflösung L3 der Optik 3, so daß alle Sensorelementen 2 jedes Sensorbereiches 4 bei der Aufnahme eines Bildes 20 jeweils annähernd dieselbe Lichtinformation erhalten. Da daher die optische Anregung jedes der zu mittelnden Sensorelemente 2 je Sensorbereich 4 annähernd identisch ist, dient die Mittelung praktisch ausschließlich der Kompensation von fertigungsbedingten Toleranzen zwischen den Sensorelementen 2.

In Figur 2 erfolgt das sequentielle Auslesen der Sensorelemente 2 des Sensorbereiches 4 zeilenmäßig, beginnend mit der ersten Zeile von oben an deren linken Rand mit jeweiligen Richtungswechseln an den Rändern des Sensorbereiches 4.

Figur 3 zeigt ein Blockschaltbild des Ausführungsbeispiels des erfindungsgemäßen Bildsensors. Bei diesem sind die Sensorelemente 2 matrixförmig entlang Zeilenleitungen R und Spaltenleitungen C angeordnet, wobei die Sensorelemente 2 symbolisch als Kreise dargestellt sind. Mittels eines Zeilendecoders RDEC und eines Spaltendecoders CDEC werden Zeilenadressen RADR bzw. Spaltenadressen CADR decodiert, die gemeinsam jeweils zur Festlegung der Adresse eines der Sensorelemente 2 dienen. Über die Zeilenadressen RADR und Spaltenadressen CADR sind die Meßwerte X der Sensorelemente 2 in einer prinzipiell beliebigen Reihenfolge auslesbar. Beim gezeigten Ausführungsbeispiel erfolgt das Auslesen jedoch ähnlich zu Figur 2 in der durch die Pfeile angedeuteten Reihenfolge, auf die weiter unten noch eingegangen wird.

Zwei der Sensorbereiche 4, in die die Sensorfläche des Bildsensors aufgeteilt ist, sind in Figur 3 gestrichelt dargestellt. Sie enthalten jeweils neun benachbarte der Sensorelemente 2. Es versteht sich von selbst, daß in Figur 3 nur eine geringe Zahl von Bildpunkt-Sensorbereichen 4, Sensorelementen 2, Sensorelementzeilen (bzw. Zeilenleitungen) R und Sensorelementspalten (bzw. Spaltenleitungen) C dargestellt sind, und daß in Wirklichkeit diese in weit größerer Anzahl vorliegen.

Der Spaltendecoder CDEC in Figur 3 hat die Funktion eines Multiplexers, dessen Eingänge mit je einer der Sensorelementspalten C verbunden sind, und dessen Ausgang entsprechend der jeweils anliegenden Spaltenadresse CADR mit einer der Spaltenleitungen C verbunden wird. An seinem Ausgang liegt somit der jeweils aktuell ausgelesene Meßwert X eines der Sensorelemente 2 vor. Die auf die weiter unten noch genauer beschriebene Weise sequentiell ausgelesenen Meßwerte X der Sensorelemente 2 werden vom Ausgang des Spaltendecoders CDEC dem Eingang eines Sigma/Delta-A/D-Wandlers ADC zugeführt.

Ein Sigma/Delta-A/D-Wandler enthält grundsätzlich die in Figur 3 dargestellten, wesentlichen Komponenten, nämlich eine mit der Ordnung L des Wandlers übereinstimmende Anzahl von Integratoren (in Figur 3 durch die Übertragungsfunktion K(z) dargestellt), einen 1-Bit-A/D-Wandler (durch einen Komparator realisiert), einen 1-Bit-D/A-Wandler in einer Rückkopplungsschleife mit einem Summationspunkt 10 und ein digitales Tiefpaßfilter 5 (Dezimationsfilter) der Ordnung L+1, welches seinem Ausgang vorgeschaltet ist. Ein solcher Wandler ADC wandelt ein überabgetastetes Signal an seinem Eingang in einen 1-Bit-Strom am Eingang seines Tiefpasses 5 um, wobei das Quantisierungsrauschen zu hohen Frequenzen in Nähe der Abtastfrequenz verlagert wird. Die sequentiellen Bits des 1-Bit-Stroms werden durch den Tiefpaß 5 digital gefiltert und in ein einziges digitales Wort der Breite n Bit umgewandelt. Durch den Tiefpaß 5 wird das hochfrequente Rauschen des Eingangssignals des Sigma/Delta-A/D-Wandlers ADC beseitigt.

Bei der Erfindung ist das Eingangssignal des Wandlers ADC die Folge von Meßwerten X der N Sensorelemente 2 oder, anders ausgedrückt, die Belichtung der Sensorbereiche 4, überabgetastet mit der Anzahl der Sensorelemente 2 pro Sensorbereich 4 (in Figur 3 ist N=3x3=9). Das durch die Sensorelemente 2 selbst verursachte Signalrauschen und das FPN sind hochfrequent, da die Sensorelemente 2 kleiner sind als die durch die Abmessungen L2 der Bildpunkt-Sensorbereiche 4 bedingte tatsächliche örtliche Auflösung des aufgenommenen Bildes. Durch Mittelung und Tießpaßfilterung werden diese Störungen gedämpft bzw. kompensiert.

Wichtig ist, daß der Sigma/Delta-A/D-Wandler ADC mit der Auslesefrequenz der Meßwerte X der Sensorelemente 2 getaktet wird. Er erzeugt bei jeder dieser Taktperioden ein Bit am Eingang des digitalen Tiefpasses 5. Das Wort der Breite n Bit am Ausgang des Tiefpasses 5 ist nach dem Abtasten aller N Sensorelemente 2 des jeweiligen Sensorbereiches 4 der gemittelte Wert ihrer Meßwerte X.

Die Genauigkeit eines Sigma/Delta-A/D-Wandlers steigt mit seiner Ordnung L und mit der Anzahl der Abtastungen pro Eingangssignal, im vorliegenden Fall also mit der Anzahl N der Sensorelemente 2 pro Sensorbereich 4. Bei gleichen Abmessungen L2 der Sensorbereiche 4 steigt somit bei einer größeren Anzahl von Sensorelemente 2 pro Sensorbereich 4 (d.h. bei kleineren Abmessungen L1 der Sensorelemente 2) die mögliche Auflösung des Sigma/Delta-A/D-Wandlers ADC (in Bit) und damit die Genauigkeit der Mittelung.

Für Bewegtbild-Aufnahmen kann die Bildpunkt-Abtastrate beispielsweise 13,5MHz betragen. Mit dieser Frequenz müssen die Bildpunkt-Sensorbereiche 4 nacheinander ausgewertet, d.h. jeder der Mittelwerte der Meßwerte X ihrer jeweiligen Sensorelemente 2 ermittelt, werden. Für die Bildung jedes Mittelwerts stehen somit 74ns zur Verfügung. Ist, wie beim Ausführungsbeispiel in Figur 3, ein gemeinsamer Sigma/Delta-A/D-Wandler ADC für alle Sensorbereiche 4 des Bildsensors 1 vorgesehen, muß dieser folglich mit einer Taktrate von Nx13,5MHz arbeiten, wobei N der Anzahl der Sensorelemente 2 je Sensorbereich 4 entspricht. Alle (74/N)ns wird der Meßwert eines Sensorelementes 2 in den Sigma/Delta-A/D-Wandler ADC eingelesen. Alle 74ns wird der Bitstrom aus N Bit in das digitale Tiefpaßfilter 5 geladen, das kurze Zeit später ein Wort der Breite n Bit ausgibt.

Einzelbild-Aufnahmen stellen geringere zeitliche Anforderungen an die Meßwert-Verarbeitung.

Ein Sigma/Delta-A/D-Wandler braucht bei anliegendem konstanten Eingangssignal eine gewisse Anzahl von Taktperioden, bis er eingeschwungen ist. Erst danach ist sein Ausgangssignal gültig. Beim betrachteten Ausführungsbeispiel wird aber mit jeder Taktperiode der Meßwert eines anderen Sensorelements 2 abgetastet (bei anderen Ausführungsbeispielen kann jeder Meßwert auch jeweils mehrmals abgetastet werden). Daher wird vor dem Beginn des Einlesens der ersten Meßwerte der Sensorelemente 2 zunächst eine (nicht dargestellte) Anzahl von weiteren Sensorelementen ausgelesen, die den als erstes auszulesenden Sensorelementen benachbart sind und die bei der Aufnahme eines Bildes zwar belichtet werden, für die eigentliche Aufnahme jedoch nicht benötigt werden. Dies genügt, um den Anfangszustand des Sigma/Delta-A/D-Wandlers ADC einzustellen. Aufgrund ihrer Nachbarschaft zu den anschließend auszulesenden Sensorelementen 2 sind deren Meßwerte sehr ähnlich denjenigen der weiteren Sensorelemente, da sie bei einer Aufnahme in etwa dieselbe Lichtmenge empfangen.

Aus demselben Grund werden die Sensorelemente 2 in Figur 3 (wie beim Ausführungsbeispiel nach Figur 2) pro Sensorbereich 4 zeilenweise mit jeweiligem Richtungswechsel an den Rändern des Sensorbereiches 4 ausgelesen. Dabei weisen die Sensorbereiche 4 in Figur 3 eine ungerade Anzahl von Sensorelementzeilen R auf, nämlich drei. Hierdurch ist erreichbar, daß nicht nur jeweils benachbarte Sensorelemente 2 innerhalb jedes der Sensorbereiche 4 nacheinander ausgelesen werden, sondern daß auch das letzte Sensorelement im linken Sensorbereich 4 (rechts unten) direkt vor dem ersten Sensorelement 2 des rechten Sensorbereiches 4 (links unten) ausgelesen werden. Vorteilhaft ist, daß hierdurch beim letzten Sensorelement 2 des vorhergehenden Sensorbereichs 4 und dem ihm direkt benachbarten ersten Sensorelment 2 des nachfolgenden Sensorbereichs 4 kein größerer Sprung zwischen den jeweiligen Meßwerten entsteht. Die aufzunehmenden Bildsignale sind bei benachbarten Sensorelementen 2 mit gegenüber der Aulösung L3 der Optik 3 kleinen Abmessungen L1 nämlich sehr ähnlich. Der Endzustand des Sigma/Delta-A/D-Wandlers ADC bei Abschluß der Mittelung der Meßwerte X des vorhergehenden Sensorbereiches 4 ist daher ein sehr gut geeigneter Anfangszustand für die Mittelung der Meßwerte X des nachfolgenden Sensorbereichs 4, so daß der Wandler ADC zwischen der Ermittlung aufeinanderfolgender Mittelwerte nicht zurückgesetzt werden muß.

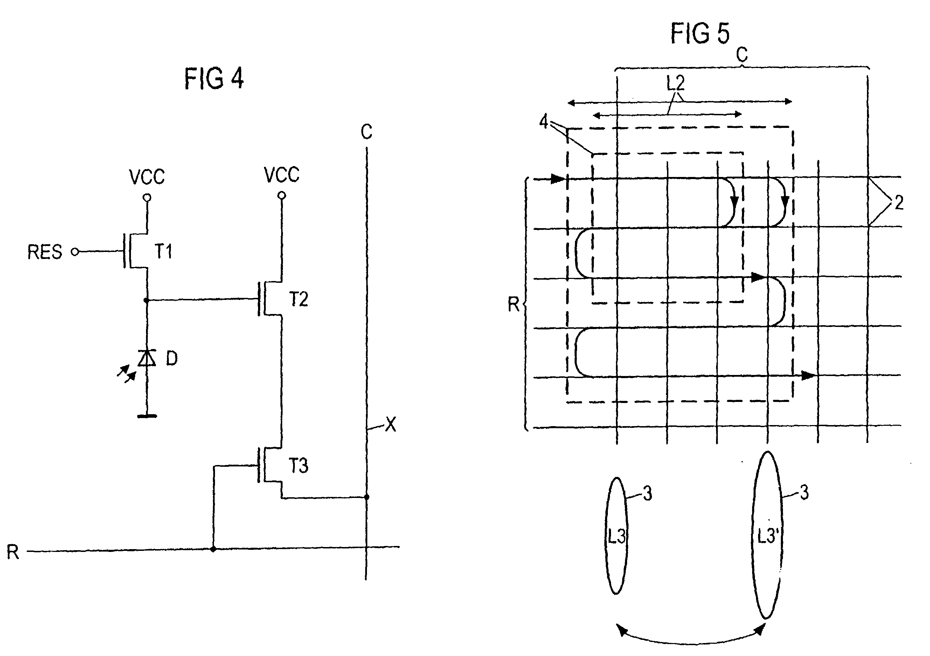

Figur 4 zeigt ein Ausführungsbeispiel der Sensorelemente 2. Dargestellt ist ein CMOS-Sensorelement. Es weist eine Fotodiode D auf, die durch Anlegen eines Rücksetzsignals RES an das Gate eines ersten Transistors T1 rücksetzbar ist. Einfallendes Licht wird in eine elektrische Spannung umgewandelt und mittels eines zweiten Transistors T2 verstärkt. Über einen dritten Transistor T3, der als Auswahltransistor dient, und dessen Gate mit einer der Zeilenleitungen R verbunden ist, ist dieses verstärkte Signal als Meßwert X auf eine der Spaltenleitungen C gebbar.

Figur 5 zeigt einen Ausschnitt aus der Sensorelementmatrix eines anderen Ausführungsbeispiels des Bildsensors. Bei diesem ist die Größe der Sensorbereiche 4 durch entsprechende Wahl der Auslesesequenz veränderbar. Dargestellt ist jeweils nur einer der Sensorbereiche 4 in zwei verschiedenen Größen. Der Sensorbereich 4 mit den kleineren Abmessungen weist neun der Sensorelemente 2 auf, während der Sensorbereich 4 mit den größeren Abmessungen zwanzig der Sensorelemente 2 aufweist. Durch die Pfeile ist dargestellt, daß je nach gewählter Größe des Sensorbereichs 4 die Auslesesequenz der Meßwerte der Sensorelemente 2 jeweils angepaßt wird, so daß immer alle Sensorelemente 2 jedes Sensorbereichs 4 immer direkt aufeinanderfolgend ausgelesen werden. Durch Festlegung der Auslesesequenz durch Anlegen entsprechender Spaltenadressen CADR und Zeilenadressen RADR an die in Figur 3 dargestellten Spaltendecoder CDEC und Zeilendecoder RDEC können die Abmessungen L2 der Sensorbereiche 4 beliebig gewählt werden.

Obwohl in Figur 5 nur jeweils einer der Sensorbereiche 4 unterschiedlicher Größe dargestellt wurde, ist festzuhalten, daß selbstverständlich alle weiteren Sensorelemente 2 ebenfalls zu entsprechenden Sensorbereichen 4 jeweils gleicher Größe, die an die dargestellten Sensorbereiche angrenzen, zusammengefaßt sind.

In Figur 5 soll der kleinere Sensorbereich 4 Abmessungen L2 aufweisen, die der Auflösung L3 der Optik 3 entsprechen. Der größere Sensorbereich 4 hat dagegen größere Abmessungen L2 und führt damit zu einer gröberen örtlichen Auflösung des aufgenommenen Bildes. Allerdings bietet er den Vorteil, daß ohne Wechsel der eingesetzten Optik 3 eine größere Anzahl von Sensorelementen 2 je Sensorbereich 4 gemittelt werden, so daß im Gegenzug eine bessere Kompensation der fertigungsbedingten Toleranzen erreicht wird. Man hat also die Wahl zwischen einer höheren örtlichen Auflösung durch die Festlegung kleinerer Bildpunkt-Sensorbereiche 4 mit relativ wenigen Sensorelementen 2 oder einer höheren Helligkeits- bzw. Farbauflösung im umgekehrten Fall.

Besonders günstig ist, das bei einem weiteren Ausführungsbeispiel der Erfindung (alternativ zur eben beschriebenen Beibehaltung derselben Optik 3) gleichzeitig zur Veränderung der Abmessungen L2 der Sensorbereiche 4 eine Veränderung der Optik 3 des Bildsensors erfolgt (in Figur 5 durch den Pfeil zwischen den beiden Optiken 3 angedeutet). In diesem Fall kann die Anpassung der Größe der Sensorbereiche 4 immer in der Weise erfolgen, daß ihre Abmessungen L2 der jeweils gewählten Auflösung L3; L3' der Optik 3 entsprechen. Die verschiedenen Auflösungen der Optik 3 sind durch austauschbare Linsen realisiert.

Bei anderen Ausführungsbeispielen der Erfindung ist es möglich, diejenigen Komponenten des Bildsensors, die die Sensorelemente 2 (in der Regel auf einer gemeinsamen integrierten Schaltung) enthalten, unabhängig von der Optik 3 herzustellen und anschließend eine Anpassung der Sensorbereich-Abmessungen L2 an die letztendlich gewählte Optik 3 vorzunehmen. Dieselbe integrierte Schaltung mit den Sensorelementen 2 kann dann in verschiedenen Bildsensoren unterschiedlicher optischer Auflösung eingesetzt werden, wobei nur die Auslesesequenz der Sensorelemente 2 angepaßt werden muß, um die Sensorbereiche 3 zu bilden.

Figur 6 zeigt einen Ausschnitt der Sensorfläche eines anderen Ausführungsbeispiels des Bildsensors. Er ist ein Farbbildsensor und weist für die Aufnahme dreier verschiedener Farben jeweils eine Sorte von Sensorelementen 2 auf. Bei diesem wäre ein sequentielles Einlesen der Meßwerte X aller Sensorbereiche 4 in einen einzigen Sigma/Delta-A/D-Wandler ungünstig, da die unterschiedlichen Arten von Sensorelmenten 2 unterschiedliche Arten von Meßwerten erzeugen, die sich beispielsweise hinsichtlich der zu erfassenden Lichtintensität unterscheiden. In Figur 6 sind die Sensorelemente 2 jeweils zu unterschiedlichen Arten von Sensorbereichen 4 zusammengefaßt, wobei Sensorbereiche 4 mit Sensorelementen 2 der ersten Farbe mit durchgezogenem Rand, diejenigen der zweiten Farbe mit gestricheltem Rand und diejenigen der dritten Farbe mit gepunktetem Rand dargestellt sind. Gezeigt sind günstige Auslesesequenzen für die Sensorelemente 2 innerhalb der Sensorbereiche 4, die beim gezeigten zeilenweisen Auslesen der Sensorbereiche 4 durch die ungerade Anzahl von Sensorelementzeilen pro Sensorbereich 4 begünstigt werden. Das Auslesen der Meßwerte erfolgt für jede der Farben getrennt und die Meßwerte X1; X2 werden sequentiell je einem von drei Sigma/Delta-A/D-Wandler ADC zugeführt, was in Figur 6 für zwei der drei Farben vereinfacht dargestellt wurde.

Da nun drei Wandler ADC zur Verfügung stehen und ein Mittelwert der Meßwerte jeweils mit der Bildpunkt-Abtastrate erzeugt werden muß, kann jeder der Wandler ADC mit einem Drittel dieser Abtastrate getaktet werden. Durch eine niedrigere Taktfrequenz der Wandler ADC ist ihre Realisierung mit geringerem Aufwand möglich.

Die drei Farben seien grün, rot und blau. Bei Farbbildsensoren ist es üblich, daß doppelt soviele grüne Bildpunkte erzeugt werden wie rote und blaue. Alternativ können beim FarbBildsensor beispielsweise auch die Komplementärfarben cyan, gelb und magenta aufgenommen werden. Auch ist zusätzlich als vierte Farbe grün möglich, womit dann vier Sigma/Delta-A/D-Wandler ADC notwendig sind.

Die Mittelung der Meßwerte der Sensorelemente 2 kann auch auf andere, hier nicht beanspruchte Weise als bei den geschilderten Ausführungsbeispielen erfolgen. Beispielsweise ist es möglich, statt eines Sigma/Delta-A/D-Wandlers einen anderen, konventionellen A/D-Wandler einzusetzen. Dieser wandelt die Meßwerte jedes Sensorbereiches 4 nacheinander in digitale Worte, die dann gespeichert werden. Nach Wandlung aller Meßwerte des entsprechenden Sensorbereiches 4 erfolgt die Mittelung der digitalisierten Meßwerte. Dies erfordert jedoch zusätzliche Speichereinrichtungen zum Speichern der digitalisierten Meßwerte. Alternativ hierzu können soviele konventionelle A/D-Wandler vorgesehen sein, wie Sensorelemente 2 pro Sensorbereich 4 vorhanden sind. Dann erfolgt die Wandlung aller Meßwerte eines der Sensorbereiche 4 parallel, so daß vor der Mittelung ein Speichern entfallen kann. Allerdings kommt es hierbei durch fertigungsbedingte Toleranzen der einzelnen A/D-Wandler (unterschiedliche Kennlinien) zu unerwünschten Fehlereinflüssen bei der Ermittlung der Mittelwerte.

Statt der CMOS-Sensorelemente bei den erläuterten Ausführungsbeispielen können die Sensorelemente 2 auch sonstige Bildsensorelemente sein. Sind es CCDs, kann die Auslesesequenz pro Sensorbereich 4 statt durch freie Spalten- und Zeilenadressierung auch durch entsprechende Verschaltung der Sensorelemente bestimmt werden, da CCDs ohnehin sequentiell wie ein Schieberegister ausgelesen werden.

Eine Abschätzung der erreichbaren Wortbreite n am Ausgang des Sigma-Delta-A/D-Wandlers ADC als Funktion seiner Ordnung L (üblich zwischen 2 und 4) und der Überabtastung N (Anzahl der Sensorelemente 2 pro Sensorbereich 4) ergibt sich aus:

$$SN = 10 \log \{ 3/2 \, (2L+1) / p^{2L} \, N^{(2L+1)} \}$$

SN ist der erzielbare Signal-zu-Rausch-Abstand in dB. SN kann in die "Auflösung in Bit" n umgerechnet werden:

$$n = (SN - 1{,}8) / 6$$

Ein SN von 49.8 dB entspricht also einer Auflösung von 8 Bit. Dies sind theoretische Werte. Für eine benötigte Auflösung in Bit wird man im Design des Wandlers ca. 6 dB SN mehr anzielen, um über die Fertigung und nichtideale Effekte eine Reserve zu haben:

$$n_{real} = (SN_{Ziel} - 7{,}8)/6.$$

Damit kann man die Anzahl N der Sensorelemente 2 pro Sensorbereich 4 abschätzen, die für eine bestimmte Auflösung benötigt wird. Es wird beispielsweise für eine Auflösung von 8 Bit: N = 22 beim Wandler 2. Ordnung, N = 13 für 3. Ordnung, und N = 9 bei Verwendung eines Wandlers 4. Ordnung. Dies sind realisierbare Werte.

Der Einsatz einer stärker integrierbaren Herstelltechnologie ermöglicht bei Bildpunkt-Sensorbereichen 4 gleichbleibender Größe kleinere, aber zahlreichere Sensorelemente pro Sensorbereich, wodurch die Oversamplingrate erhöht wird. Bei einem Schwarzweiß-Bildsensor, der gemäß Figur 5 gestaltet ist, kann man während der Benutzung durch Änderung der Auslesesequenz die Sensorbereich-Abmessungen L2 variieren. Mehr Sensorelemente 2 festliegender Größe pro Sensorbereich 4 unterschiedlicher Größe ergeben eine höhere Grauwertauflösung bei reduzierter räumlicher Auflösung. Beide Möglichkeiten haben die gleiche Konsequenz: Ein verbesserter Signal-zu-Rausch-Abstand beim Sigma-Delta-A/D-Wandler und eine verbesserte FPN-Unterdrückung.

In der folgenden Tabelle ist zur Illustration für einen Sensorbereich aus N = 3 x 5 Sensorelementen die erzielbare Wortbreite n in Bit eingetragen, wenn der Sensorbereich um jeweils eine Sensorreihe und eine Sensorspalte erweitert wird (6dB Designreserve berücksichtigt):

| Ordnung L des ADC | N = 3x5 = 15 | 4x6=24 | 5x7=35 | 6x8=48 |
|---|---|---|---|---|
| 2 | 6.8 | 8.3 | 10.0 | 10.8 |
| 3 | 9.2 | 11.7 | 13.3 | 15.0 |

Die Tabelle kann wie folgt interpretiert werden: Wenn die Sensorbereich-Größe z.B. von 24 Sensorelementen auf 35, also um 46%, vergrößert wird, erhöht sich die Grauwerttiefe von 8,3 auf 10 Bit.

Eine andere, auch für Farbsensoren gültige Schlußfolgerung:

Bei Verkleinerung der Sensorelemente kann die Anzahl von Sensorelementen pro Sensorbereich erhöht werden. Ein Wechsel von z.B. einer 0,5µ-Technologie zu einer 0,35µ-Technologie verdoppelt die mögliche Überabtastungsrate und erhöht die Auflösung des Wandlers und die FPN-Unterdrückung um 2,5 Bit, oder macht bei gleichbleibender Auflösung den Einsatz eines Wandlers kleinerer Ordnung mit entsprechend kleinerer Fläche und geringerem Stromverbrauch möglich. Damit ist ein Weg angegeben, wie die Steigerung der Integrationsdichte trotz festliegender optischer Auflösung mit jeder Prozeßgeneration zu verbesserten Bildsensoren führt.

**Patentansprüche**

1. Bildsensor (1) mit einer Vielzahl von Bildpunkt-Sensorbereichen (4) und einer Optik (3), die ein durch den Bildsensor aufzunehmendes Bild (20) auf die Sensorbereiche (4) abbildet, bei dem

   - jeder der Sensorbereiche (4) mehrere Sensorelemente (2) aufweist und
   - bei der Aufnahme eines Bildes (20) für jeden Sensorbereich (4) eine Mittelung der Meßwerte (X) seiner Sensorelemente (2) erfolgt, wobei jeder Mittelwert einem Bildpunkt des aufgenommenen Bildes entspricht,

   **dadurch gekennzeichnet,**
   **daß** innerhalb einer Abtastperiode eines aufzunehmenden Bildes (20) Meßwerte (X) der Sensorelemente (2) wenigstens eines der Sensorbereiche (4) jeweils nacheinander einem entsprechend getakteten Sigma/Delta-Analog-Digital-Wandler (ADC) zum Zwecke der Mittelung zugeführt werden.

2. Bildsensor nach Anspruch 1,
   bei dem die Sensorelemente (2) matrixförmig in Zeilen (R) und Spalten (C) angeordnet sind und ihre Meßwerte (X) pro Sensorbereich (4) zeilenweise oder spaltenweise mit jeweiligem Richtungswechsel an den Rändern des Sensorbereichs (4) dem Sigma/Delta-Analog-Digital-Wandler (ADC) zugeführt werden.

3. Bildsensor nach Anspruch 2,
   bei dem das Auslesen der Sensorelemente (2) jedes Sensorbereiches (4)

   - entweder zeilenweise erfolgt, und die Anzahl der Sensorelementzeilen (R) je Sensorbereich (4) ungerade ist,
   - oder spaltenweise erfolgt, und die Anzahl der Sensorelementspalten (C) je Sensorbereich (4) ungerade ist.

4. Bildsensor nach einem der Ansprüche 1 bis 3,
   bei dem die Meßwerte (X) der Sensorelemente (2) aller Sensorbereiche (4) nacheinander einem gemeinsamen Sigma/Delta-Analog-Digital-Wandler (ADC) zugeführt werden.

5. Bildsensor nach einem der Ansprüche 1 bis 4,

   - der ein Farbbildsensor mit wenigstens zwei Arten von Sensorelementen (2) zum Aufnehmen von jeweils verschiedenen Farben eines Bildes (20) ist, die jeweils zu einer von zwei Arten von Sensorbereichen (4) zusammengefaßt sind, und
   - der zur Mittelung der Meßwerte (X) der Sensorelemente (2) je aufzunehmender Farbe wenigstens einen Sigma/Delta-Analog-Digital-Wandler (ADC) aufweist.

6. Bildsensor nach einem der vorstehenden Ansprüche,
   bei dem die Abmessungen (L2) der Sensorbereiche (4) wenigstens annähernd gleich der Auflösung (L3) der Optik (3) sind.

7. Bildsensor nach einem der vorstehenden Ansprüche,
   bei dem die Abmessungen (L2) der Sensorbereiche (4) und somit die Anzahl der Sensorelemente (2) pro Sensorbereich (4) veränderbar sind.

8. Bildsensor nach Anspruch 7,
   bei dem in Abhängigkeit der jeweils gewählten Abmessungen (L2) der Sensorbereiche (4) eine Anpassung der Auflösung (L3) der Optik (3) erfolgt.

9. Bildsensor nach einem der vorstehenden Ansprüche,
   bei dem die Sensorelemente (2) CMOS-Sensorelemente sind.


**Claims**

1. Image sensor (1) having a multiplicity of pixel sensor regions (4) and an optical arrangement (3), which images an image (20) to be recorded by the image sensor onto the sensor regions (4), in which

- each of the sensor regions (4) has a plurality of sensor elements (2), and
- during the recording of an image (20) for each sensor region (4), the measured values (X) of its sensor elements (2) are averaged, each average value corresponding to a pixel of the recorded image,

**characterized**
**in that** within a sampling period of an image (20) to be recorded, measured values (X) of the sensor elements (2) of at least one of the sensor regions (4) are in each case fed successively to a correspondingly clocked sigma/delta analog-to-digital converter (ADC) for the purpose of averaging.

2. Image sensor according to Claim 1,
in which the sensor elements (2) are arranged in the form of a matrix in rows (R) and columns (C) and their measured values (X) per sensor region (4) are fed to the sigma/delta analog-to-digital converter (ADC) in a row-by-row manner or column-by-column manner with a respective change of direction at the edges of the sensor region (4).

3. Image sensor according to Claim 2,
in which the sensor elements (2) of each sensor region (4) are read

- either in a row-by-row manner, and the number of sensor element rows (R) for each sensor region (4) is odd,
- or in a column-by-column manner, and the number of sensor element columns (C) for each sensor region (4) is odd.

4. Image sensor according to one of Claims 1 to 3,
in which the measured values (X) of the sensor elements (2) of all the sensor regions (4) are fed successively to a common sigma/delta analog-to-digital converter (ADC).

5. Image sensor according to one of Claims 1 to 4,

- which is a colour image sensor having at least two types of sensor element (2) for recording in each case different colours of an image (20), which are in each case combined into one of two types of sensor regions (4), and
- which has at least one sigma/delta analog-to-digital converter (ADC) for averaging the measured values (X) of the sensor elements (2) for each colour to be recorded.

6. Image sensor according to one of the preceding claims,
in which the dimensions (L2) of the sensor regions (4) are at least approximately equal to the resolution (L3) of the optical arrangement (3).

7. Image sensor according to one of the preceding claims,
in which the dimensions (L2) of the sensor regions (4) and thus the number of sensor elements (2) per sensor region (4) are variable.

8. Image sensor according to Claim 7,
in which the resolution (L3) of the optical arrangement (3) is adapted depending on the dimensions (L2) chosen in each case for the sensor regions (4).

9. Image sensor according to one of the preceding claims,
in which the sensor elements (2) are CMOS sensor elements.

**Revendications**

1. Détecteur (1) d'images ayant une pluralité de zones (4) de détecteur de pixels et une optique (3), qui reproduit sur les zones (4) de détecteur une image (20) enregistrée par le détecteur d'images, dans lequel

- chacune des zones (4) de détecteur comporte plusieurs éléments (2) de détecteur et
- lors de l'enregistrement d'une image (20) il s'effectue pour chaque zone (4) de détecteur une moyenne des valeurs (X) de mesure de ces éléments de détecteur, chaque valeur moyenne correspondant à un pixel de l'image enregistrée,

**caractérisé**
**en ce que** dans un intervalle de balayage d'une image (20) à enregistrer, des valeurs (X) de mesure des éléments (2) de détecteur d'au moins l'une des zones (4) de détecteur sont envoyées respectivement successivement en vue d'effectuer la moyenne à un convertisseur (ADC) analogique/numérique sigma/delta synchronisé de manière adéquate.

2. Détecteur d'images suivant la revendication 1,
dans lequel les éléments (2) de détecteur sont disposés sous la forme d'une matrice en lignes (R) et en colonnes (C) et leurs valeurs (X) de mesure sont envoyées par zones (4) de détecteur, ligne par ligne ou colonne par colonne, avec le changement de direction correspondant sur les bords de la zone (4) de détecteur, au convertisseur (ADC) analogique/numérique sigma/delta.

3. Détecteur d'images suivant la revendication 2,
dans lequel la lecture des éléments (2) de détecteur de chaque zone (4) de détecteur

- s'effectue soit ligne par ligne et le nombre des lignes (R) d'éléments de détecteur par zone (4) de détecteur est impair,
- soit s'effectue colonne par colonne et le nombre des colonnes (C) d'éléments de détecteur par zone (4) de détecteur est impair.

4. Détecteur d'images suivant l'une des revendications 1 à 3, dans lequel les valeurs (X) de mesure des éléments (2) de détecteur de toutes les zones (4) de détecteur sont envoyées successivement à un convertisseur (ADC) analogique/numérique sigma/delta commun.

5. Détecteur d'images suivant l'une des revendications 1 à 4,

- qui est un détecteur d'images en couleur ayant au moins deux types d'éléments (2) de détecteur pour l'enregistrement de couleurs respectivement différentes d'une image (20), qui sont rassemblées respectivement en l'un de deux types de zones (4) de détecteur et
- qui comporte pour faire la moyenne (X) de mesure des éléments (2) de détecteur au moins un convertisseur (ADC) analogique/numérique sigma/delta par respectivement couleur enregistrée.

6. Détecteur d'images suivant l'une des revendications précédentes, dans lequel les dimensions (L2) des zones (4) de détecteur sont au moins approximativement égales à la résolution (L3) de l'optique (3).

7. Détecteur d'images suivant l'une des revendications précédentes, dans lequel les dimensions (L2) des zones (4) de détecteur par zone (4) de détecteur peuvent être modifiées.

8. Détecteur d'images suivant la revendication 7, dans lequel il s'effectue en fonction des dimensions (L2) respectivement choisies des zones (4) de détecteur une adaptation de la résolution (L3) de l'optique.

9. Détecteur d'images suivant l'une des revendications précédentes, dans lequel les éléments (2) de détecteur sont des éléments de détecteur CMOS.

FIG 1

FIG 6

# FIG 2

# FIG 3

EP 0 974 226 B1

## FIG 4

## FIG 5

EP 0 974 226 B1